(19) **Europäisches Patentamt / European Patent Office / Office européen des brevets**

(11) **EP 1 890 004 A1**

(12) **EUROPÄISCHE PATENTANMELDUNG**

(43) Veröffentlichungstag:
20.02.2008 Patentblatt 2008/08

(51) Int Cl.:
$F01D\ 5/00$ (2006.01)  $C23C\ 24/00$ (2006.01)
$C25F\ 5/00$ (2006.01)

(21) Anmeldenummer: 06090133.7

(22) Anmeldetag: 08.08.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(71) Anmelder: SIEMENS AKTIENGESELLSCHAFT
80333 München (DE)

(72) Erfinder:
• Jabado, Rene
14199 Berlin (DE)

• Jensen, Jens Dahl, Dr.
14050 Berlin (DK)
• Krüger, Ursus, Dr.
14089 Berlin (DE)
• Körtvelyessy, Daniel
13469 Berlin (DE)
• Lüthen, Volkmar, Dr.
12157 Berlin (DE)
• Reiche, Ralph
13465 Berlin (DE)
• Rindler, Michael
15566 Schöneiche (DE)
• Ullrich, Raymond
14621 Schönwalde (DE)

(54) **Verfahren zum Herstellen einer Nutzschicht aus wiederverwendetem Schichtmaterial**

(57) Die Erfindung bezieht sich u. a. auf ein Verfahren zum Herstellen eines Ausgangsmaterials (M, N, N') für die Herstellung einer Nutzschicht (420).

Erfindungsgemäß ist vorgesehen, dass eine Beschichtung (40) mit einer Zusammensetzung, die der herzustellenden Nutzschicht (420) entspricht, von ihrem Träger (30) chemisch ungelöst und als Festkörper abgelöst wird und dass mit dem Schichtmaterial (60) der abgelösten Beschichtung (40) das Ausgangsmaterial (M, N, N') gebildet wird.

FIG 3

EP 1 890 004 A1

**Beschreibung**

Die Erfindung bezieht sich auf ein Verfahren zum Herstellen einer Nutzschicht sowie auf ein Verfahren zum Herstellen eines Ausgangsmaterials - englischsprachig bzw. fachsprachlich auch Feed-Stock-Material genannt - zur späteren bzw. nachfolgenden Herstellung einer Nutzschicht. Unter dem Begriff "Nutzschicht" ist in diesem Zusammenhang eine Schicht zu verstehen, die einen technischen Nutzen aufweist, beispielsweise eine katalytische Wirkung zeigt oder eine Schutzwirkung für einen mit der Nutzschicht beschichteten Gegenstand entfaltet.

Nutzschichten können beispielsweise auf der Basis von Nanopartikeln hergestellt werden. Bei Nanopartikeln handelt es sich um Partikel, die eine Partikelgröße im Nanometerbereich (1 nm bis 1000 nm) aufweisen sowie meistens chemische und physikalische Eigenschaften zeigen, die sich von denen ihres Partikelmaterials als solchem unterscheiden. Die unterschiedlichen Eigenschaften der Nanopartikel beruhen auf der relativ großen äußeren Oberfläche relativ zu ihrem Volumen.

Darüber hinaus ist beispielsweise aus der europäischen Offenlegungsschrift EP 1 215 306 bekannt, dass MCrAlY-Schutzschichten für den Einsatz als Schutzbeschichtung für Turbinenschaufeln eingesetzt werden.

Der Erfindung liegt die Aufgabe zugrunde, ein Verfahren zum Herstellen eines Ausgangsmaterials für die Herstellung einer Nutzschicht anzugeben, das sich mit vergleichsweise wenig Aufwand durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass eine Beschichtung mit einer Zusammensetzung, die der herzustellenden Nutzschicht entspricht, von ihrem Träger chemisch ungelöst als Festkörper abgelöst wird und mit dem Schichtmaterial der abgelösten Beschichtung das Ausgangsmaterial gebildet wird.

Ein wesentlicher Vorteil des erfindungsgemäßen Verfahrens besteht darin, dass sich mit diesem ohne großen Aufwand ein Ausgangsmaterial für eine Nutzschicht mit einer vorgegebenen chemischen Zusammensetzung bilden lässt. Die Herstellung einer Nutzschicht mit einer komplexen chemischen Struktur ist bei bisherigen vorbekannten Verfahren sehr aufwendig, weil die Materialzusammensetzung des Ausgangsmaterials sehr genau eingestellt werden muss, um für die Nutzschicht die gewünschten Eigenschaften zu erhalten: Beispielsweise für Turbinenschaufel-Schutzschichten geeignetes MCrAlY-Material wird heutzutage durch Mischen von Nickelpulver mit CrAlY-Pulver hergestellt, wobei Spurenelemente wie Rhenium hinzugemischt werden; dies ist jedoch relativ aufwendig und kostenintensiv. An dieser Stelle setzt die Erfindung an, indem erfindungsgemäß vorgesehen wird, für die Herstellung der Nutzschicht eine bereits vorhandene Beschichtung mit der richtigen Materialzusammensetzung heranzuziehen, diese von ihrem Träger abzulösen und das abgelöste Schichtmaterial als mittelbares oder unmittelbares Ausgangsmaterial für die Herstellung der Nutzschicht zu verwenden. Mit anderen Worten besteht der erfinderische Gedanke also darin, eine einmal bereitgestellte, also bereits vorhandene Beschichtungszusammensetzung zu erhalten und diese für neue Nutzschichten zu verwenden, so dass ein kostenaufwendiges Neumischen der Materialzusammensetzung entfällt.

Im Hinblick auf die bereits erwähnte, besondere technische Wirkung von Nanopartikeln wird es als vorteilhaft angesehen, wenn das Verfahren zum Herstellen eines Ausgangsmaterials (Feed-Stock-Material) eingesetzt wird, das für die Herstellung einer auf Nanopartikeln basierende Nutzschicht bzw. für die Herstellung von Nanopartikeln als solchen geeignet ist.

Ein Ausgangsmaterial für die Herstellung von Nanopartikeln lässt sich besonders einfach und damit vorteilhaft dadurch herstellen, dass eine Beschichtung in Form einer Nanopartikelschicht mit einer Nanopartikelzusammensetzung, die der der herzustellenden Nanopartikel entspricht, von ihrem Träger chemisch ungelöst als Festkörper abgelöst wird und dass mit dem Schichtmaterial der abgelösten Nanopartikelschicht das Ausgangsmaterial für die Herstellung der Nanopartikel gebildet wird.

Im Hinblick auf minimale Herstellungskosten wird es dabei als vorteilhaft angesehen, wenn eine benutzte, insbesondere eine beschädigte oder abgenutzte Beschichtung - vorzugsweise in Form einer Nanopartikelschicht - zur Herstellung des Ausgangsmaterials verwendet wird. Beispielsweise können auf diese Weise Schutzschichten von Turbinenschaufeln, insbesondere auf der Basis von MCrAlY-Material recycelt werden, um neue Schutzschichten, insbesondere neue Nanopartikel, mit identischer Zusammensetzung wie die der recycelten Schutzschicht zu bilden.

Bezüglich einer einfachen und damit vorteilhaften Weiterverarbeitung des Schichtmaterials der abgelösten Beschichtung bzw. der abgelösten Nanopartikelschicht wird es als vorteilhaft angesehen, wenn die Beschichtung zumindest abschnittsweise als Folie abgelöst wird. Handelt es sich bei der Beschichtung um eine Nanopartikelschicht, so wird diese vorzugsweise zumindest abschnittsweise als Nanopartikelfolie abgelöst.

Besonders schnell und einfach lässt sich eine Beschichtung ablösen, indem der Träger mit der darauf befindlichen Beschichtung in einen Elektrolyten eingebracht und ein elektrischer Strom im Elektrolyten hervorgerufen wird. Bevorzugt wird an eine Elektrode im Elektrolyten ein negatives und an den Träger ein positives Potential angelegt, um ein besonders schnelles Ablösen der Beschichtung zu erreichen.

Besonders bevorzugt werden an den Träger elektrische Pulse angelegt, da bei einem Pulsbetrieb die Ablösegeschwindigkeit der Beschichtung besonders groß ist. Geeignet sind in diesem Zusammenhang elektrische Pulse, die in dem Elektrolyten mit einer Routine erzeugt werden, die einen Dutycycle zwischen 0% und 100 % (0 < Dutycycle < 100 %), zumindest zwei unterschiedliche Stromdichten jeweils zwischen 5 und 1000 mA/cm$^2$ und zumindest eine Wiederhol- bzw. Pulsfrequenz zwischen 5 und 1000 Hz aufweist.

Besonders bevorzugt werden elektrische Pulse mit zumindest drei unterschiedlichen Stromdichten und zwei unterschiedlichen Pulsfrequenzen erzeugt, wobei zwischen der größten der drei Stromdichten und der kleinsten der drei Stromdichten mit einer kleineren Pulsfrequenz umgeschaltet wird als zwischen der größten Stromdichte und der mittleren Stromdichte. In dieser Weise entsteht ein überlagerter Strompulsverlauf, der auch als "Superimposed Pulse Pattern" bezeichnet werden kann.

Die Weiterverarbeitung der abgelösten Beschichtung lässt sich besonders einfach und damit vorteilhaft durchführen, wenn das Schichtmaterial der abgelösten Beschichtung unter Bildung von Mikropartikeln zerschreddert wird. Die Mikropartikel weisen dann eine chemische Zusammensetzung auf, die der der herzustellenden Nutzschicht bzw. den herzustellenden Nanopartikeln identisch entspricht. Die Korngröße der Mikropartikel liegt vorzugsweise zwischen 1 Mikrometer und 1000 Mikrometern.

Die Erfindung bezieht sich darüber hinaus auf ein Verfahren zum Herstellen von Nanopartikeln. Erfindungsgemäß ist bezüglich eines solchen Verfahrens vorgesehen, ein Ausgangsmaterial, das wie oben beschrieben erzeugt worden ist, weiter zu verwenden und mit diesem die Nanopartikel herzustellen.

Bezüglich der Vorteile des erfindungsgemäßen Verfahrens zur Herstellung von Nanopartikeln sei auf die obigen Ausführungen im Zusammenhang mit der Herstellung eines Ausgangsmaterials bzw. Feed-Stock-Materials verwiesen, da die dort erläuterten Vorteile in analoger Weise vorliegen.

Das Schichtmaterial der abgelösten Beschichtung bzw. der Nanopartikelschicht kann im Rahmen der Weiterverarbeitung beispielsweise unter Bildung von Materialclustern im Nanoformat vaporisiert werden; ein solches Vaporisieren kann zum Beispiel nach einem Zerschreddern der abgelösten Beschichtung erfolgen.

Alternativ kann Ausgangsmaterial einem Atomisierungsschritt unterworfen werden, bei dem das Ausgangsmaterial in seine Bestandteile, vorzugsweise in seine Moleküle oder Atome, aufgespalten wird und bei dem die aufgespaltenen Bestandteile unter Bildung der Nanopartikel neu zusammengesetzt werden.

Das Aufspalten des Ausgangsmaterials in seine Bestandteile kann besonders einfach und damit vorteilhaft durch Flammspritzen oder durch Einwirken eines Plasmas erfolgen.

Ein Flammspritzen kann beispielsweise durchgeführt werden, indem ein Acetylengas verbrannt wird, wobei eine sehr hohe Temperatur hervorgerufen und damit eine sehr große thermische Energie freigesetzt wird; die freigesetzte thermische Energie spaltet das Ausgangsmaterial in seine Bestandteile auf.

Wird anstelle eines Flammspritzens ein Plasma zum Aufspalten des Ausgangsmaterials eingesetzt, so beruht das Aufspalten des Ausgangsmaterials hauptsächlich oder ausschließlich auf der Einwirkung kinetischer Energie und elektrischer Felder, die das Plasma hervorrufen. Ein Plasma kann besonders einfach und damit vorteilhaft durch einen Gleichstromlichtbogen (DC-Plasma), einen Wechselstromlichtbogen oder einen gepulsten Lichtbogen gebildet werden.

Wird das Schichtmaterial der abgelösten Beschichtung bzw. der abgelösten Nanopartikelschicht unter Bildung von Materialclustern im Nanoformat vaporisiert, so wird es als vorteilhaft angesehen, wenn die Materialcluster bzw. Nanocluster, beispielsweise in Form eines nanoskaligen Pulvers, unter Bildung einer neuen Nanopartikelschicht auf einen Gegenstand unter Bildung einer "Nutzschicht" aufgespritzt werden.

Im Hinblick auf Recyclingprozesse wird es als vorteilhaft angesehen, wenn die Nanocluster auf einen Gegenstand aufgespritzt werden, der mit dem Träger, von dem die Nanopartikelschicht abgelöst worden ist, identisch, baugleich oder funktionsgleich ist.

Mit Blick auf die große technische Bedeutung, die Nutzschichten, insbesondere Nanopartikel basierte Nutzschichten, für den Einsatz als Schutzschicht auf Turbinenschaufeln aufweisen, wird es als vorteilhaft angesehen, wenn mit den hergestellten Nanopartikeln eine Nanopartikelschicht als Schutzschicht für eine Turbinenschaufel hergestellt wird. Vorzugsweise wird mit den Nanopartikeln eine MCrA1Y-Schutzschicht gebildet.

Die Erfindung wird nachfolgend anhand von Ausführungsbeispielen näher erläutert: Dabei zeigen beispielhaft

Figur 1      eine Anordnung zum Ablösen einer Beschichtung von einem Träger vor dem Ablösen der Beschichtung,

Figur 1A      ein erstes Beispiel für einen gepulsten Stromverlauf,

Figur 1B      ein zweites Beispiel für einen gepulsten Stromverlauf,

Figur 2      den Träger gemäß Figur 1 nach einem Ablösen der Beschichtung,

Figur 3      die Herstellung von Mikroteilchen auf der Basis einer abgelösten Beschichtung mit Hilfe einer Zerschreddereinrichtung,

Figur 4      die Weiterverarbeitung von Mikroteilchen mit Hilfe einer Nanoteilchenherstellungseinrichtung,

Figur 5 die Herstellung von Materialclustern im Nanoformat (Nanocluster) mit Hilfe eines Plasmaabbrenners und

Figur 6 das Herstellen einer auf Nanopartikeln basierenden Nutzschicht mit Hilfe einer Spritzanlage.

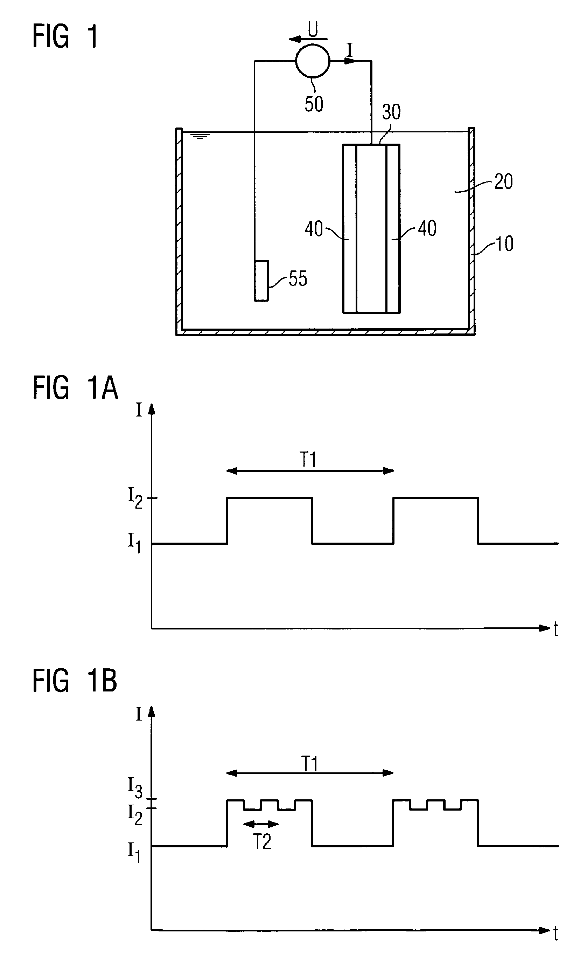

In der Figur 1 erkennt man einen Behälter 10, in dem ein Elektrolyt 20 enthalten ist. Bei dem Elektrolyten 20 kann es sich beispielsweise um Salzsäure mit einem Konzentrationsbereich zwischen 5 und 20 % handeln.

In dem Elektrolyten 20 befindet sich ein Träger 30, der mit einer Nanopartikelschicht 40 beschichtet ist. Mit dem Träger 30 (als Anode) ist ein Plusanschluss einer Spannungsquelle 50 verbunden, deren Minusanschluss mit dem Elektrolyten 20 über eine Elektrode 55 (Kathode) in elektrischer Verbindung steht. Vorzugsweise wird der Träger 30 vor dem Einbringen in den Elektrolyten beispielsweise durch Sandstrahlen gesäubert, um eine Verschmutzung des Elektrolyten 20 zu vermeiden.

Durch die Spannungsquelle 50 wird ein Strom I durch den Träger 30 und den Elektrolyten 20 hervorgerufen, durch den die Nanopartikelschicht 40 von dem Träger 30 zumindest abschnittsweise unter Bildung von Nanopartikelfolien abgelöst wird. Mit Blick auf ein möglichst schnelles Ablösen der Nanopartikelschicht 40 wird es als vorteilhaft angesehen, wenn der Strom I gepulst erzeugt wird und einen Dutycycle zwischen 0 und 100 %, zwei unterschiedliche Stromdichten I1 und I2 jeweils zwischen 5 und 1000 mA/cm$^2$ und eine Frequenz f1=1/T1 zwischen 5 bis 1000 Hz aufweist (vgl. Figur 1A).

Noch besser löst sich die Nanopartikelschicht 40 bei einem Stromverlauf I ab, wie er in der Figur 1B dargestellt ist: Man erkennt, dass die elektrischen Pulse I mit drei unterschiedlichen Stromdichten und zwei unterschiedlichen Pulsfrequenzen f1 und f2 erzeugt werden, wobei zwischen der größten der drei Stromdichten I3 und der kleinsten der drei Stromdichten I1 mit einer kleineren Pulsfrequenz f1=1/T1 umgeschaltet wird als zwischen der größten Stromdichte I3 und der mittleren Stromdichte I2; zwischen der größten Stromdichte I3 und der mittleren Stromdichte I2 wird mit einer Pulsfrequenz f2=1/T2 umgeschaltet (f1 < f2). In dieser Weise entsteht ein überlagerter Strompulsverlauf ("Superimposed Pulse Pattern"). Vorzugsweise ist die Differenz zwischen der größten Stromdichte I3 und der mittleren Stromdichte I2 kleiner als die Differenz zwischen der mittleren Stromdichte I2 und der kleinsten Stromdichte I1:

$$I3 - I2 < I2 - I1$$

Alternativ kann die Differenz zwischen der größten Stromdichte I3 und der mittleren Stromdichte I2 jedoch auch größer als die Differenz zwischen der mittleren Stromdichte I2 und der kleinsten Stromdichte I1 sein:

$$I3 - I2 > I2 - I1$$

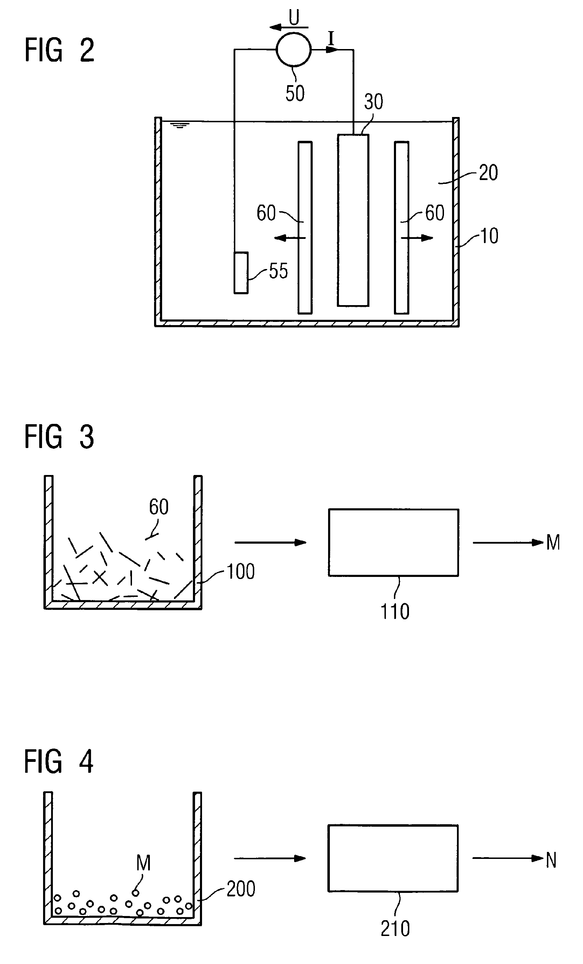

Die von dem Träger 30 abgelösten Nanopartikelfolien sind in der Figur 2 dargestellt und dort mit dem Bezugszeichen 60 gekennzeichnet.

In der Figur 3 ist dargestellt, wie die abgelösten Nanopartikelfolien 60 weiterverarbeitet werden können. Man erkennt in der Figur 3 einen Behälter 100, in dem die Nanopartikelfolien 60 nach einem Herausfiltern aus dem Elektrolyten 20 und einem Trocknen gelagert sind.

Von dem Behälter 100 gelangen die Nanopartikelfolien 60 in eine Zerschreddereinrichtung 110, die die Nanopartikelfolien 60 unter Bildung von Mikropartikeln M zerschreddert. Die Mikropartikel M bilden somit ein Ausgangsmaterial bzw. ein Feed-Stock-Material, das für die Herstellung von Nanopartikeln oder der Bildung einer Nutzschicht basierend auf Nanopartikeln geeignet ist, da es bereits eine richtige Nanopartikelzusammensetzung aufweist.

In der Figur 4 ist beispielhaft dargestellt, wie die Mikropartikel M gemäß Figur 3 zu Nanopartikeln weiterverarbeitet werden können. Hierfür werden die Mikropartikel M in einem Behälter 200 aufbewahrt und von dort zu einer Nanopartikelherstellungseinrichtung 210 geleitet, in der die Nanopartikel N gebildet werden.

Die Herstellung der Nanopartikel N auf der Basis der Mikropartikel M kann beispielsweise im Rahmen eines Atomisierungsschritts erfolgen, bei dem die Mikropartikel M in ihre Atome aufgespalten werden und die aufgespaltenen Atome unter Bildung der Nanopartikel neu zusammengesetzt werden. Das Atomisieren der Mikropartikel M kann beispielsweise durch Flammspritzen auf der Basis von Acetylen oder durch Einwirken eines Plasmas erfolgen. Ein solches Plasma kann beispielsweise mit einem Gleichstromlichtbogen, einem Wechselstromlichtbogen oder einem gepulsten Lichtbogen gebildet werden.

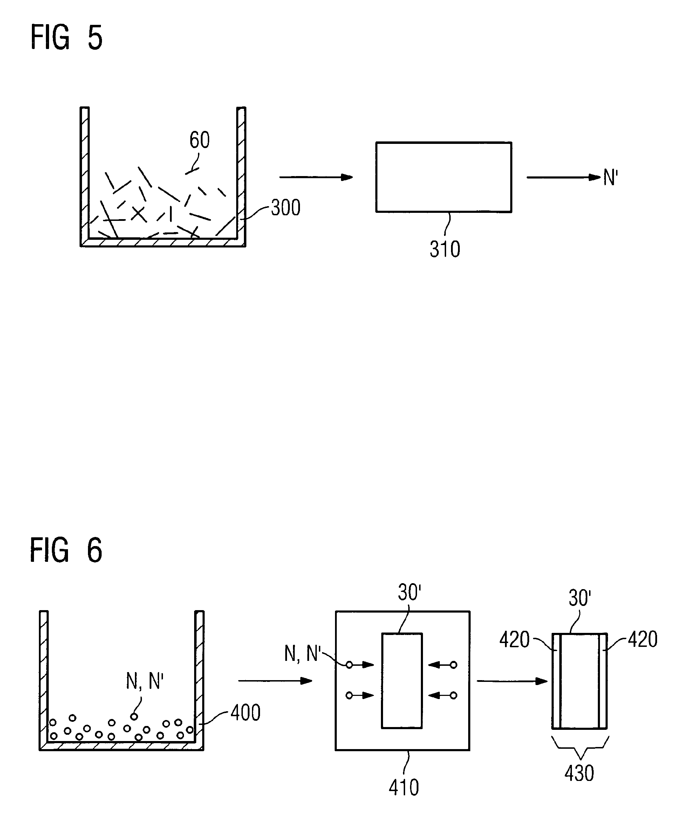

In der Figur 5 ist ein weiteres Ausführungsbeispiel für die Herstellung von Nanopartikeln dargestellt. Man erkennt abgelöste Nanopartikelfolien 60, die beispielsweise hergestellt worden sind, wie dies im Zusammenhang mit den Figuren 1 und 2 erläutert worden ist.

Die Nanopartikelfolien 60 befinden sich in einem Behälter 300 und gelangen von diesem zu einem Plasmaabbrenner 310, der die Nanopartikelfolien auf eine Temperatur über 10000°C erhitzt. Durch dieses Erhitzen werden die Nanopartikelfolien 60 vaporisiert, so dass Materialcluster im Nanoformat - nachfolgend Nanocluster genannt - gebildet werden. Die Nanocluster bilden Nanopartikel und sind in der Figur 5 mit dem Bezugszeichen N' gekennzeichnet und können als nanoskaliges Pulver unmittelbar weiter verwendet werden.

Die Funktionsweise des Plasmaabbrenners 310 beruht vereinfacht beschrieben darauf, dass dieser durch die hohe Temperatur eines Plasmas die Mikropartikel M in deren Atome zerlegt und anschließend im Rahmen eines Kondensierens bzw. Kondensationsvorganges die Atome wieder in Nanopartikel bzw. Nanocluster zurückkondensiert.

In der Figur 6 ist eine Weiterverarbeitung der Nanopartikel N gemäß Figur 4 bzw. der Nanocluster N' gemäß Figur 5 beispielhaft gezeigt. Man erkennt in der Figur 6 einen Behälter 400, in dem die Nanopartikel N bzw. die Nanocluster N' aufbewahrt werden. Vor dort gelangen die Nanopartikel N bzw. die Nanocluster N' zu einer Spritzanlage 410, in der diese auf einen zu beschichtenden Gegenstand 30' aufgespritzt werden. Bei dem Gegenstand 30' kann es sich beispielsweise um den Träger 30 gemäß der Figur 2 handeln oder um einen baugleichen oder funktionsgleichen Gegenstand.

Durch das Aufspritzen der Nanopartikel N bzw. der Nanocluster N' wird eine Nutzschicht 420 auf dem Gegenstand 30' gebildet, die auf Nanopartikeln beruht und somit Nanopartikeleigenschaften aufweist. Der mit der Nutzschicht 420 beschichtete Gegenstand 30' ist in der Figur 6 in seiner Gesamtheit mit dem Bezugszeichen 430 gekennzeichnet.

Zusammengefasst ist festzustellen, dass die Nanopartikel N gemäß Figur 4 sowie die Nanocluster N' gemäß Figur 5 bereits die richtige Materialzusammensetzung aufweisen, die für die Nutzschicht 420 erforderlich ist, weil sie unmittelbar aus einer entsprechenden Nanopartikelschicht 40 abgeleitet bzw. mit dieser gebildet wurden. Insbesondere sind alle Spurenelemente, die für Nanopartikel, zum Beispiel auf der Basis von MCrAlY-Material, notwendig sind, bereits vorhanden, so dass diese nicht extra zugemischt werden müssen.

Falls Aluminium für die Herstellung der Nanopartikel N bzw. der Nanocluster N' zusätzlich erforderlich sein sollte, so kann dieses zu den Mikropartikeln M gemäß Figur 4 bzw. zu den Nanopartikelfolien 60 gemäß Figur 5 hinzugefügt werden, bevor mit der Nanopartikelherstellungseinrichtung 210 bzw. mit dem Plasmaabbrenner 310 die Nanopartikel N bzw. die Nanocluster N' hergestellt werden.

Mit den anhand der Figuren beispielhaft beschriebenen Verfahren ist ein Recyceln sogenannter MCrAlY-Schichten, wie sie für Turbinenschaufeln von Generatoren eingesetzt werden, möglich. Durch den Recycelvorgang kann man ein Spritzpulver im Nanoformat erhalten, dem keine Spurenelemente mehr zugesetzt werden müssen und das unmittelbar zum Aufspritzen auf eine Turbinenschaufel eingesetzt werden kann. Ein Neumischen bzw. eine vollständige Neuherstellung des Spritzpulvers wird somit vermieden.

## Patentansprüche

1. Verfahren zum Herstellen eines Ausgangsmaterials (M, N, N') für die Herstellung einer Nutzschicht (420), **dadurch gekennzeichnet,** **dass** eine Beschichtung (40) mit einer Zusammensetzung, die der herzustellenden Nutzschicht (420) entspricht, von ihrem Träger (30) chemisch ungelöst und als Festkörper abgelöst wird und dass mit dem Schichtmaterial (60) der abgelösten Beschichtung (40) das Ausgangsmaterial (M, N, N') gebildet wird.

2. Verfahren nach Anspruch 1, **dadurch gekennzeichnet,** **dass** eine benutzte, insbesondere abgenutzte oder beschädigte, Beschichtung in Form einer Nanopartikelschicht (40) recycelt wird, in dem die benutzte Nanopartikelschicht chemisch ungelöst als Festkörper abgelöst wird und mit dem Schichtmaterial (60) der abgelösten, benutzten Nanopartikelschicht (40) das Ausgangsmaterial (M, N, N') gebildet wird.

3. Verfahren nach Anspruch 1 oder 2, **dadurch gekennzeichnet,** **dass** die Beschichtung zumindest abschnittsweise als Folie (60) abgelöst wird.

4. Verfahren nach einem der voranstehenden Ansprüche, **dadurch gekennzeichnet,** **dass** die Beschichtung abgelöst wird, indem der Träger mit der darauf befindlichen Beschichtung in einen Elektrolyten (20) eingebracht wird und ein elektrisches Potential an den Elektrolyten angelegt wird.

5. Verfahren nach Anspruch 4, **dadurch gekennzeichnet,** **dass** an eine Elektrode im Elektrolyten (20) ein negatives und an den Träger (30) ein positives Potential angelegt wird.

6. Verfahren nach Anspruch 4 oder 5, **dadurch gekennzeichnet,** **dass** an den Träger (30) elektrische Pulse angelegt werden.

7. Verfahren nach Anspruch 6, **dadurch gekennzeichnet,** **dass** in dem Elektrolyten (20) Strompulse (I) mit einer Routine erzeugt werden, die einen Dutycycle zwischen 0 und 100 %, mindestens zwei unterschiedliche Stromdichten (I1, I2) jeweils zwischen 5 bis 1000 mA/cm$^2$ und mindestens eine Frequenz zwischen 5 und 1000 Hz aufweist.

8. Verfahren nach Anspruch 6 oder 7, **dadurch gekennzeichnet,** **dass** die elektrischen Pulse mit zumindest drei unterschiedlichen Stromdichten (I1, I2, I3) und zwei unterschiedlichen Pulsfrequenzen (f1, f2) erzeugt werden, wobei zwischen der größten der drei Stromdichten (I3) und der kleinsten der drei Stromdichten (I1)

mit einer kleineren Pulsfrequenz (f1) umgeschaltet wird als zwischen der größten Stromdichte und der mittleren Stromdichte (I2).

9. Verfahren nach einem der voranstehenden Ansprüche,
   **dadurch gekennzeichnet,**
   **dass** das Schichtmaterial (60) der abgelösten Beschichtung (40) unter Bildung von Mikropartikeln (M) zerschreddert wird.

10. Verfahren nach Anspruch 9,
    **dadurch gekennzeichnet,**
    **dass** die Mikropartikel (M) eine chemische Zusammensetzung aufweisen, die der der herzustellenden Nutzschicht (420) entspricht.

11. Verfahren nach Anspruch 9 oder 10,
    **dadurch gekennzeichnet,**
    **dass** die Mikropartikel (M) eine vorgegebene Partikelgröße zwischen 1 $\mu$m und 1000 $\mu$m aufweisen.

12. Verfahren zum Herstellen von Nanopartikeln (N, N'),
    **dadurch gekennzeichnet,**
    **dass** ein Ausgangsmaterial (60, M) nach einem der voranstehenden Ansprüche gebildet und mit diesem die Nanopartikel (N, N') hergestellt werden.

13. Verfahren nach Anspruch 12,
    **dadurch gekennzeichnet,**
    **dass** das Schichtmaterial (60) der abgelösten Beschichtung (40) unter Bildung von Materialclustern (N') im Nanoformat vaporisiert wird.

14. Verfahren nach Anspruch 12,
    **dadurch gekennzeichnet,**
    **dass** das Ausgangsmaterial (60, M) einem Atomisierungsschritt unterworfen wird, bei dem das Ausgangsmaterial (60, M) in seine Bestandteile aufgespalten wird, und dass die aufgespaltenen Bestandteile unter Bildung der Nanopartikel (N) neu zusammengesetzt werden.

15. Verfahren nach Anspruch 14,
    **dadurch gekennzeichnet,**
    **dass** das Aufspalten des Ausgangsmaterials (M) durch Flammspritzen oder durch Einwirken eines Plasmas erfolgt.

16. Verfahren nach Anspruch 15,
    **dadurch gekennzeichnet,**
    **dass** das Plasma durch Erzeugen eines Gleichstromlichtbogens, eines Wechselstromlichtbogens oder eines gepulsten Lichtbogens gebildet wird.

17. Verfahren nach einem der voranstehenden Ansprüche 12-16,
    **dadurch gekennzeichnet,**

**dass** die Nanoteilchen (N, N'), insbesondere als nanoskaliges Pulver, unter Bildung einer neuen Nanopartikelschicht (420) auf einen Gegenstand (30') unter Bildung einer Nutzschicht (420) aufgespritzt werden.

18. Verfahren nach einem der voranstehenden Ansprüche 12 bis 17,
    **dadurch gekennzeichnet,**
    **dass** die Nanopartikel (N, N') auf einen Gegenstand (30') aufgespritzt werden, der mit dem Träger (30) identisch, baugleich oder funktionsgleich ist.

19. Verfahren nach einem der voranstehenden Ansprüche 12 bis 18,
    **dadurch gekennzeichnet,**
    **dass** mit den Nanopartikeln eine Nanopartikelschicht (420) als Schutzschicht auf einer Turbinenschaufel (30') hergestellt wird.

20. Verfahren nach einem der voranstehenden Ansprüche 12 bis 19,
    **dadurch gekennzeichnet,**
    **dass** mit den Nanopartikeln (N, N') eine MCrAlY-Schutzschicht gebildet wird.

FIG 1

FIG 1A

FIG 1B

FIG 2

FIG 3

FIG 4

FIG 5

FIG 6

**Europäisches Patentamt**

**EUROPÄISCHER RECHERCHENBERICHT**

Nummer der Anmeldung

EP 06 09 0133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DD 235 889 A1 (SASNOWSKI HYDRAULIK NORD [DD]) 21. Mai 1986 (1986-05-21) | 1,4,5 | INV. F01D5/00 C23C24/00 C25F5/00 |
| A | * Zusammenfassung * * Seite 3, Zeilen 7-20 * ----- | 11,18 | |
| Y | DE 43 03 137 A1 (MOTOREN TURBINEN UNION [DE]) 11. August 1994 (1994-08-11) * Spalte 1, Zeile 64 - Spalte 2, Zeile 1 * * Spalte 1, Zeilen 3,4,26-31 * ----- | 1,2,4-12 | |
| Y | DATABASE WPI Week 200231 Derwent Publications Ltd., London, GB; AN 2002-265065 XP002412439 & KR 2001 099 374 A (LEE H M) 9. November 2001 (2001-11-09) * Zusammenfassung * ----- | 1,2,9-12 | |
| Y | EP 1 632 589 A2 (SIEMENS AG [DE]) 8. März 2006 (2006-03-08) * Absätze [0010], [0011] * * Abbildung 5 * * Ansprüche 1,3,5,6,9,10 * ----- | 4-8 | RECHERCHIERTE SACHGEBIETE (IPC) C25F C23C F01D |
| A | US 6 423 129 B1 (FITZGIBBONS JR ROBERT T [US]) 23. Juli 2002 (2002-07-23) * Spalte 1, Zeilen 7-21 * * Spalte 2, Zeilen 8-21 * * Spalte 2, Zeile 63 - Spalte 4, Zeile 24 * ----- | 1,2, 9-12,17 | |
| A | EP 1 122 323 A1 (GEN ELECTRIC [US]) 8. August 2001 (2001-08-08) * Absätze [0010], [0014], [0018], [0019] * ----- -/-- | 1 | |

Der vorliegende Recherchenbericht wurde für alle Patentansprüche erstellt

| Recherchenort | Abschlußdatum der Recherche | Prüfer |
|---|---|---|
| München | 20. Dezember 2006 | Zech-Agarwal, Nicole |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**
**Patentamt**

**EUROPÄISCHER RECHERCHENBERICHT**

**Nummer der Anmeldung**

EP 06 09 0133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2004/057066 A (SIEMENS AG [DE]; KOERTVELYESSY DANIEL [DE]; KRUEGER URSUS [DE]; MICHEL) 8. Juli 2004 (2004-07-08) * Seite 6 * * Ansprüche * ----- | 4,5 | |
| D,A | EP 1 215 306 A (UNITED TECHNOLOGIES CORP [US]) 19. Juni 2002 (2002-06-19) * Zusammenfassung * * Absätze [0001], [0019], [0032] - [0035] * ----- | 4,5 | |
| A | WO 2006/068660 A2 (DIAMOND INNOVATIONS INC [US]; O'NEILL PADRAIC [IE]) 29. Juni 2006 (2006-06-29) * Absätze [0003], [0026] * * Abbildung 2 * ----- | 4 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 20. Dezember 2006 | Zech-Agarwal, Nicole |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 09 0133

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2006

| Im Recherchenbericht angeführtes Patentdokument | Datum der Veröffentlichung | Mitglied(er) der Patentfamilie | Datum der Veröffentlichung |
|---|---|---|---|
| DD 235889 A1 | 21-05-1986 | KEINE | |
| DE 4303137 A1 | 11-08-1994 | KEINE | |
| KR 2001099374 A | | KEINE | |
| EP 1632589 A2 | 08-03-2006 | KEINE | |
| US 6423129 B1 | 23-07-2002 | KEINE | |
| EP 1122323 A1 | 08-08-2001 | BR 0100215 A<br>JP 2001294951 A<br>SG 108818 A1<br>US 6428602 B1 | 28-08-2001<br>26-10-2001<br>28-02-2005<br>06-08-2002 |
| WO 2004057066 A | 08-07-2004 | WO 2004057067 A1<br>DE 10259363 A1<br>EP 1573095 A1<br>EP 1573096 A1 | 08-07-2004<br>08-07-2004<br>14-09-2005<br>14-09-2005 |
| EP 1215306 A | 19-06-2002 | BR 0106227 A<br>CA 2365009 A1<br>CN 1382837 A<br>HU 0105339 A2<br>JP 3839313 B2<br>JP 2002242000 A<br>KR 20020047028 A<br>MX PA01012894 A<br>PL 351197 A1<br>RU 2215068 C2<br>SG 93295 A1<br>UA 66412 C2<br>US 2002074240 A1 | 20-08-2002<br>15-06-2002<br>04-12-2002<br>28-04-2004<br>01-11-2006<br>28-08-2002<br>21-06-2002<br>03-12-2004<br>17-06-2002<br>27-10-2003<br>17-12-2002<br>15-03-2004<br>20-06-2002 |
| WO 2006068660 A2 | 29-06-2006 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1215306 A